# EUROPÄISCHE PATENTSCHRIFT

(11) **EP 4 067 634 B1**
(45) Veröffentlichungstag und Bekanntmachung des Hinweises auf die Patenterteilung: **11.12.2024**
(21) Anmeldenummer: 22159322.1
(22) Anmeldetag: 25.04.2017
(51) Int. Cl.: F02B 19/10, F02B 19/12, F02M 21/02

(54) **VORKAMMER-ZÜNDKERZENAUFNAHMEANORDNUNG**
PRECHAMBER SPARK PLUG RECEIVING ARRANGEMENT
AGENCEMENT DE RÉCEPTION DE BOUGIE D'ALLUMAGE DE CHAMBRE DE PRÉCOMBUSTION

(30) Priorität: 26.04.2016 DE 102016107669
(43) Veröffentlichungstag der Anmeldung: 05.10.2022
(62) Teilanmeldung aus: 17720005.2
(73) Patentinhaber: L'Orange GmbH, 70435 Stuttgart (DE)
(72) Erfinder: WILLMANN, Michael, 88697 Bermatingen (DE); RESSEL, Horst, 71397 Leutenbach (DE); SCHNEIDER, Hartmut, 72657 Altenried (DE); MAIERHOFER, Martin, 70499 Stuttgart (DE); BERGER, Ingmar, 70374 Stuttgart (DE)
(74) Vertreter: Fish & Richardson P.C.

(56) Entgegenhaltungen:
- EP-A2- 1 203 871
- WO-A1-2010/009489
- DE-A1- 10 016 558
- US-A- 3 406 667
- US-A1- 2016 319 791

## Beschreibung

Die Erfindung bezieht sich auf eine Vorkammer-Zündkerzenaufnahmeanordnung mit einer Vorkammer-Zündkerze nach dem Oberbegriff des Anspruches 1.

In der DE 10 2013 210 125 A1 wird eine Vorkammer-Zündkerzenaufnahmeanordnung für einen Gasmotor beschrieben, bei der mithilfe einer Zündkerze ein Brenngas-Luftgemisch in einer Vorkammer entflammt wird. Die Vorkammer-Zündkerzenaufnahmeanordnung nimmt in einer Wasserhülse, die in einen Zylinderkopf der Brennkraftmaschine einsetzbar ist, die Vorkammer-Zündkerze auf, wobei durch die Wandung der Wasserhülse ein Brennstoffkanal für die Zufuhr des Brenngases zur Vorkammer geführt ist. Im Zylinderkopf verläuft ein Zuströmkanal für das Brenngas, der in eine ringförmige Verteilernut mündet, welche mit dem Brennstoffkanal in der Wasserhülse strömungsverbunden ist.

Die DE 100 16 558 A1 beschreibt ein Verfahren zur Entflammung sehr magerer Kraftstoff-Luft-Gemische mit einer am Rande eines Hauptbrennraums einer Brennkraftmaschine angeordneten fremdgezündeten Vorkammer-Zündkerze, die über Überströmkanäle mit dem Hauptbrennraum verbunden ist, wobei eine geringe Menge Zusatzkraftstoff ventilgesteuert in die Vorkammer eingebracht wird. Die DE 100 16 558 A1 beschreibt weiterhin eine Anordnung, insbesondere für die Anwendung bei Gasmotoren, mit einer eine Zündkerze umgebenden Vorkammer, die zum Hauptbrennraum führende, vorzugsweise tangential verlaufende Überströmkanäle aufweist, und mit einem Zusatzkraftstoff zuführenden, extrem dünnen Versorgungskanal, über den insbesondere mit einem Magnetventil zeitgesteuert unter hohem Druck stehender Kraftstoff während des Verdichtungstaktes der Brennkraftmaschine zugemessen wird.

Die WO 2010/009489 A1 beschreibt eine Vorrichtung zur Zündung eines Treibstoff/Luftgemischs im Brennraum einer Brennkraftmaschine, mit einer Elektrode, die mit einer Spannungsquelle verbunden ist und die in eine Vorkammer reicht, wobei die Vorkammer durch eine Wandung vom Brennraum zumindest bereichsweise abgetrennt ist, wobei eine Steuereinrichtung oder Regeleinrichtung vorgesehen ist, welche die Spannungszufuhr an die Elektrode derart regelt, dass in der Vorkammer eine Coronaentladung stattfindet, wobei die Wandung zumindest eine Öffnung zum Austausch von Fluiden zwischen Brennraum und Vorkammer aufweist, wobei ein Fluideinlass in die Vorkammer mündet.

Die US 3 406 667 A beschreibt ein geschichtetes Ladungszündsystem für einen Verbrennungsmotor mit Funkenzündung. Die Vorrichtung umfasst: eine Vorverbrennungskammer, die in Fluidverbindung mit jeder Hauptverbrennungskammer des Motors anstelle der normalerweise damit verbundenen Zündkerze gekoppelt ist; eine Vergasereinrichtung, um jeder Vorverbrennungskammer ein relativ fettes Kraftstoff-Luft-Gemisch zuzuführen; und eine Funkenzündungseinrichtung, um die Zündung des jeder der Kammern zugeführten Kraftstoff-Luft-Gemischs in zeitlicher Abfolge zum Betrieb des Motors zu bewirken. Die Fluidverbindung zwischen jeder Vorverbrennungskammer und der mit ihr gekoppelten Hauptverbrennungskammer wird durch eine Öffnung hergestellt, die ein Borda-Mundstück umfasst, das sich in die Vorverbrennung öffnet, um eine sich darin erstreckende unperforierte Lippe zu definieren; und eine Düse von im wesentlichen kegelstumpfförmiger Gestalt, die sich von dem Mundstück in divergierender Beziehung dazu erstreckt und sich in die Hauptverbrennungskammer öffnet.

Die EP 1 203 871 A2 beschreibt ein Rückschlagventil und insbesondere ein Rückschlagventil für einen Kraftstoffkanal einer Vorkammeranordnung einer Brennkraftmaschine, die ein Trägerelement, ein Anschlagelement und ein Ringelement umfasst. Das Ringelement ist elastisch zwischen dem Träger- und dem Anschlagelement angeordnet. Das Ringelement ist zwischen einer ersten Position, in der es die Fluidverbindung zwischen dem Träger- und dem Anschlagelement blockiert, und einer zweiten Position, in der es Fluid zwischen dem Träger- und dem Anschlagelement durchlässt, beweglich. Die Hauptanwendung ist für Anwendungen, die den Flüssigkeitsdurchgang zwischen Komponenten steuern, wie z. B. Vorkammerbaugruppen in Gasmotoren.

Der Erfindung liegt die Aufgabe zugrunde, mit einfachen konstruktiven Maßnahmen eine Vorkammer-Zündkerzenaufnahmeanordnung kompakt und mit präziser Steuerung des zuzuführenden Brennstoffes auszubilden.

Diese Aufgabe wird erfindungsgemäß mit den Merkmalen des Anspruches 1 oder des Anspruches 11 gelöst. Die Unteransprüche geben zweckmäßige Weiterbildungen an.

Die erfindungsgemäße Vorkammer-Zündkerzenaufnahmeanordnung weist eine Gehäusebuchse auf, in die eine Vorkammer-Zündkerze einsetzbar ist, über die Brennstoff in einer Vorkammer entflammbar ist. Der Brennstoff wird durch mindestens einen Brennstoffkanal zur Vorkammer geleitet, wobei der oder die Brennstoffkanäle in die Wandung der Gehäusebuchse eingebracht sind. Der mindestens eine Brennstoffkanal mündet beispielsweise auf der der Vorkammer zugewandten Seite in einen weiteren Kanal, der als Verteilernut und/oder Ringspalt ausgebildet sein kann und zum Beispiel in ein Zündkerzengehäuse der eingesetzten Zündkerze eingebracht sein kann. Dieser weitere Kanal erstreckt sich vorteilhafterweise bis zur Vorkammer.

Die Vorkammer-Zündkerzenaufnahmeanordnung wird vorzugsweise in einem Gasmotor eingesetzt und mit dem Zylinderkopf des Motors verbunden. Die Erfindung bezieht sich entsprechend auch auf einen Gasmotor mit einer Vorkammer-Zündkerzenaufnahmeanordnung im Zylinderkopf.

Die Vorkammer-Zündkerzenaufnahmeanordnung ist zumindest mit einem Ventilglied eines Schaltventils zur Regulierung des Brennstoffstroms durch den mindestens einen Brennstoffkanal ausgestattet. Das Ventilglied, das ein verstellbares Bauteil des Schaltventils bildet, ist zumindest teilweise in oder an der Wandung der Gehäusebuchse angeordnet und bildet einen Teil der Vorkammer-Zündkerzenaufnahmeanordnung. Das verstellbare Ventilglied ist in oder an der Wandung der Gehäusebuchse angeordnet und zwischen einer Schließ- und einer Öffnungsposition verstellbar, wobei in der Schließposition der Brennstoffstrom entweder unterbrochen oder zumindest auf ein Minimum reduziert ist und in der Öffnungsposition der maximale Brennstoffstrom fließen kann. Vorteilhafterweise kann das Ventilglied verschiedene Zwischenpositionen zwischen Schließ- und Öffnungsposition einnehmen, um die Höhe des Brennstoffstromes einstellen zu können. Es kann gegebenenfalls aber auch ausreichend sein, dass das Ventilglied lediglich die Schließposition und in die Öffnungsposition einnehmen und zwischen Schließ- und Öffnungsposition verstellt werden kann.

Aufgrund der Integration zumindest des Ventilglieds des Schaltventils in die oder an der Wandung der Gehäusebuchse ist eine kompakte Ausführung gegeben. Zudem lässt sich der Brennstoffstrom mit hoher Präzision steuern, da die Distanz zwischen dem Ventilglied und der Vorkammer im Vergleich zu außerhalb der Gehäusebuchse positionierten Schaltventilen verkürzt ist. Schaltvorgänge wirken sich entsprechend schneller auf die Befüllung der Vorkammer mit Brennstoff aus.

Weitere, insbesondere nicht-verstellbare Bauteile des Schaltventils wie zum Beispiel Ventilgehäuseteile können auch mit der Vorkammer-Zündkerzenaufnahmeanordnung verbunden, insbesondere in oder an der Wandung der Gehäusebuchse angeordnet sein. Gegebenenfalls sind sämtliche Bauteile des Schaltventils mit der Vorkammer-Zündkerzenaufnahmeanordnung verbunden. Alternativ ist es auch möglich, einzelne Bauteile des Schaltventils außerhalb der Vorkammer-Zündkerzenaufnahmeanordnung anzuordnen.

Das Ventilglied liegt im Strömungsweg des mindestens einen Brennstoffkanals der Wandung der die Zündkerze aufnehmenden Gehäusebuchse. Das Schaltventil umfasst außerdem einen Aktor, über den das Ventilglied verstellbar ist. Der Aktor ist vorteilhafterweise in oder an der Wandung der Gehäusebuchse angeordnet. Es kann zweckmäßig sein, dass der Aktor und das Ventilglied eine zusammenhängende Baueinheit bilden, die in die Wandung der Gehäusebuchse eingefügt ist, beispielsweise in eine Ausnehmung in der Wandung vollständig oder teilweise eingesetzt ist, oder an einer Seite der Wandung angeordnet ist.

Es sind aber auch Ausführungen möglich, bei denen der Aktor nicht in die Wandung der Gehäusebuchse integriert ist, sondern sich an einer Seite der Wandung, beispielsweise an der Außenseite der Wandung, zum Beispiel an der Stirnseite der Wandung der Gehäusebuchse befindet. Der Aktor kann gegebenenfalls über eine Stellstange mit dem Ventilglied verbunden sein und dieses verstellen oder, in einer weiteren Ausführung, auf elektromagnetische Weise das Ventilglied verstellen; in diesem Fall ist es beispielsweise möglich, den Aktor an der Außenseite der Wandung der Gehäusebuchse anzuordnen und die Verstellung des Ventilglieds über ein elektromagnetisches Feld, welches vom Aktor erzeugt wird, zu bewirken.

Der Aktor ist vorteilhafterweise elektrisch steuerbar, so dass durch Bestromung des Aktors die gewünschte Verstellung des Ventilgliedes erreicht wird. Erfindungsgemäß ist der Aktor elektromagnetisch ausgebildet und weist eine bestrombare Magnetspule auf, die bei Bestromung ein elektromagnetisches Feld erzeugt, das das aus einem weichmagnetischen Material bestehende Ventilglied verstellt.

Das Ventilglied ist vorteilhafterweise von einem Federelement in eine Endposition kraftbeaufschlagt, insbesondere in die Schließposition, so dass ohne Bestromung des Aktors das Schaltventil in der Schließposition steht und der Brennstoffstrom unterbrochen oder auf ein Minimum reduziert ist. Mit Bestromung des Aktors wird das Ventilglied gegen die Kraft des auf ihn wirkenden Federelementes in Richtung der Öffnungsposition verstellt.

Bei der erfindungsgemäßen Ausführung des Aktors als Magnetspule läuft diese erfindungsgemäß in der Wandung der Gehäusebuchse ringförmig um. Die Wicklungen der Magnetspule besitzen somit zumindest annähernd den gleichen Durchmesser wie die bevorzugt zylindrisch ausgebildete Gehäusebuchse. Die Magnetspule befindet sich insbesondere unmittelbar an der Außenseite der Gehäusebuchse und weist mehrere sich in Achsrichtung der Zündkerze erstreckende, übereinander liegende Wicklungen auf.

Das Schaltventil weist, gemäß einer weiteren vorteilhaften Ausführung, ein Ventilgehäuse auf, in welchem zumindest das Ventilglied, gegebenenfalls auch der Aktor angeordnet sind. Das Ventilgehäuse ist in bevorzugter Ausführung mit der Gehäusebuchse verbindbar, insbesondere auf die Gehäusebuchse aufsetzbar und umgreift somit die Außenseite der Gehäusebuchse. Das Ventilgehäuse kann beispielsweise auf die Gehäusebuchse aufgeschraubt werden. Mit dem Aufsetzen des Ventilgehäuses auf die Gehäusebuchse gelangt das Ventilglied in den Strömungsweg durch den Brennstoffkanal.

Gemäß einer weiteren zweckmäßigen Ausführung sind über den Umfang verteilt mehrere Brennstoffkanäle in die Wandung der Gehäusebuchse eingebracht. Hierbei kommen sowohl Ausführungen in Betracht, bei denen sämtlichen Brennstoffkanälen ein gemeinsames Ventilglied zugeordnet ist, bei dessen Verstellung zwischen Schließ- und Öffnungsposition der Strömungsweg durch jeden Brennstoffkanal geschlossen bzw. geöffnet wird, als auch Ausführungen mit jeweils einem Ventilglied pro Brennstoffkanal. In jedem Fall ist es zweckmäßig, dass das Ventilglied oder die Ventilglieder von einem gemeinsamen Aktor verstellt werden, auch wenn Ausführungen möglich sind, bei denen jedem Ventilglied jeweils ein Aktor zugeordnet ist. Im letztgenannten Fall ist pro Brennstoffkanal ein Schaltventil vorgesehen.

Gemäß noch einer weiteren zweckmäßigen Ausführung bildet die Gehäusebuchse eine Wasserbuchse, die wassergekühlt ist. Der Kühlkreislauf für die Wasserbuchse ist unabhängig von dem Schaltventil ausgebildet, so dass die Kühlfunktion und die Schaltfunktion sich nicht gegenseitig beeinträchtigen.

Gemäß einer weiteren zweckmäßigen Ausführung ist das verstellbare Ventilglied des Schaltventils von dem Aktor gebildet. Bei Bestromung des Aktors verstellt sich dieser zwischen der Schließ- und der Öffnungsposition. In der elektromagnetischen Ausführung des Aktors wird dieser bei Bestromung gegen die Kraft eines auf ihn wirkenden Federelementes gegen die Wandung der Gehäusebuchse gezogen, die zu diesem Zweck weichmagnetisch ausgebildet ist. Gegebenenfalls kann ein weichmagnetisches Bauteil in die Wandung der Gehäusebuchse integriert werden, gegen das der Aktor bei Bestromung verstellt wird.

Die Stellbewegung des Ventilglieds ist vorteilhafterweise eine translatorische Bewegung. Es kommen aber auch rotatorische Stellbewegungen bzw. Schwenkbewegungen des Ventilgliedes in Betracht, über die der Strömungsweg durch den Brennstoffkanal freigegeben bzw. versperrt wird.

Die Verstellung des Ventilgliedes kann gegebenenfalls auch auf hydraulischem oder pneumatischem Wege erfolgen. Die Verstellung erfolgt entsprechend über ein Aktuierungsmedium, das flüssig oder gasförmig ist. Das Aktuierungsmedium kann gegebenenfalls von außerhalb des Schaltventils zu dem Ventilglied geführt werden.

Weitere Vorteile und zweckmäßige Ausführungen sind den weiteren Ansprüchen, der Figurenbeschreibung und den Zeichnungen zu entnehmen. Es zeigen:
- Fig. 1: eine Vorkammer-Zündkerzenaufnahmeanordnung mit einer Vorkammer-Zündkerze in einer Wasserbuchse, in die auch ein Schaltventil zum Regulieren des Brennstoffstroms eingebracht ist, dargestellt imLängsschnitt,
- Fig. 2: eine Vorkammer-Zündkerzenaufnahmeanordnung im Längsschnitt mit einem detailliert dargestellten Schaltventil.

In den Figuren sind gleiche Bauteile mit gleichen Bezugszeichen versehen.

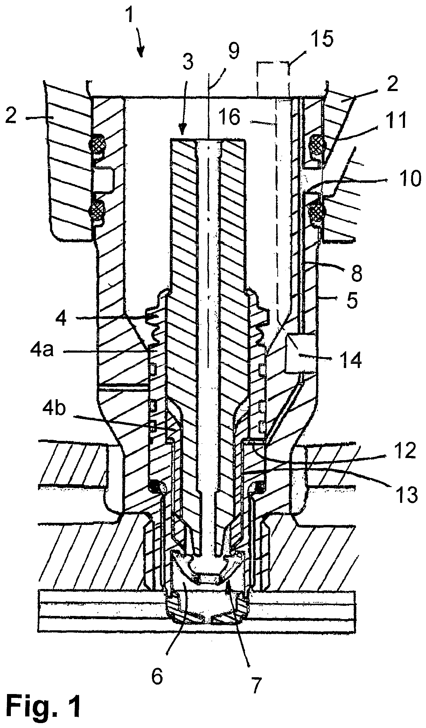

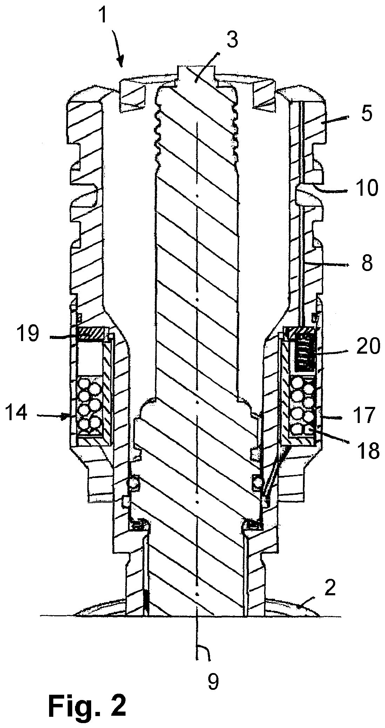

Wie Fig. 1 in Verbindung mit Fig. 2 zu entnehmen, ist eine Vorkammer-Zündkerzenaufnahmeanordnung 1 an einem Zylinderkopf 2 eines Gasmotors angeordnet, die zum Zünden eines Brenngas-Luft-Gemisches in einer Vorkammer 6 mithilfe einer Zündanordnung 7 dient. Eine Zündkerze 3 der Vorkammer-Zündkerzenaufnahmeanordnung 1 ist in einem Zündkerzengehäuse 4 aufgenommen, das in eine Gehäusebuchse 5 eingesetzt ist, welche ebenfalls Bestandteil der Vorkammer-Zündkerzenaufnahme-anordnung 1 ist. Die Gehäusebuchse 5 ist als eine Wasserbuchse ausgeführt und wird wassergekühlt.

Das Zündkerzengehäuse 4 der Zündkerze 3 ist mehrteilig aufgebaut und umfasst zwei Gehäuseteile 4a und 4b, die an der Innenwand der aufnehmenden Gehäusebuchse 5 anliegen. Beide Gehäuseteile 4a und 4b sind hülsenförmig ausgebildet, wobei das erste Gehäuseteil 4a das zweite Gehäuseteil 4b umgreift.

In die Wandung der Wasserbuchse 5 ist ein Brennstoffkanal 8 eingebracht, der sich - bezogen auf die Längsachse 9 der Zündkerze 3 - in Achsrichtung durch die Wandung erstreckt und mit einer Verteilernut 10 verbunden ist, die ringförmig umlaufend in die Wandung der Wasserbuchse eingebracht ist und ihrerseits mit einem Zuströmkanal 11 im Zylinderkopf 2 strömungsverbunden ist, über den der Brennstoff zugeführt wird.

Der Brennstoff wird somit über den Zuströmkanal 11 und die Verteilernut 10 in den Brennstoffkanal 8 in der Wandung der Wasserbuchse 5 in Richtung der Vorkammer 6 geleitet.

Auf der der Vorkammer 6 zugewandten Seite mündet der Brennstoffkanal 8 über eine weitere Verteilernut 12, die als Kanal ausgeführt sein kann, in einen umlaufenden Ringspalt 13, der sich bis zur Vorkammer 6 erstreckt. Dort kann der Brennstoff über die Zündanordnung 7 entflammt werden.

Die Verteilernut 12 auf der der Vorkammer 6 zugewandten Seite ist in das erste Gehäuseteil 4a der Zündkerze 3 eingebracht und verläuft in Radialrichtung. Der Ringspalt 13, in den die Verteilernut 12 mündet, verläuft in Achsrichtung und befindet sich zwischen dem umgreifenden ersten Gehäuseteil 4a und dem radial innenliegenden, zweiten Gehäuseteil 4b. Auf der der Vorkammer 6 zugewandten Seite knickt der Ringspalt 13 nach Art eines Kegelstumpfes radial nach innen ab und mündet in die Vorkammer 6.

Im Strömungsweg des Brennstoffkanals 8 befindet sich in der Wandung der Wasserbuchse 5 ein Schaltventil 14, mit dem der Brennstoffstrom durch den Brennstoffkanal 8 reguliert werden kann. Der Brennstoffkanal 8 verläuft oberhalb des Schaltventils 14 in Achsrichtung und unterhalb des Schaltventils 14 - auf der der Vorkammer 6 zugewandten Seite - winklig nach innen bis zum Erreichen der radial weiter innenliegenden Verteilernut 12.

Das Schaltventil 14 ist in eine Ausnehmung in der Wandung eingesetzt und vollständig in die Wandung der Wasserbuchse 5 integriert. In einer alternativen Ausführung ist das Schaltventil 14 nur teilweise in die Wandung der Wasserbuchse 5 integriert und ragt entweder an der radialen Innenseite oder an der radialen Außenseite über die Wandung der Wasserbuchse 5 hinaus. Des Weiteren ist auch eine Ausführung möglich, in der das Schaltventil 14 an der Außen- oder Innenseite der Wandung der Wasserbuchse 5 angeordnet ist; in diesem Fall mündet beispielsweise der Brennstoffkanal 8 in das Schaltventil 14 und ist auf der der Vorkammer 6 zugewandten Seite des Schaltventils 14 in der Wandung der Wasserbuchse 5 weitergeführt.

Das Schaltventil 14 umfasst ein verstellbares Ventilglied, das von einem Aktor zwischen einer den Brennstoffkanal versperrenden Schließposition und einer den Brennstoffkanal freigebenden Öffnungsposition verstellbar ist. Der Aktor ist in bevorzugter Ausführung in das Schaltventil 14 integriert.

Der Aktor kann sich aber auch außerhalb des Schaltventils befinden. In Fig. 1 ist an der axialen Stirnseite der Vorkammer-Zündkerzenaufnahmeanordnung 1, insbesondere an der Stirnseite der Wasserbuchse 5 mit gestrichelter Linie ein Aktor 15 eingetragen, der über ein Verbindungsglied 16, beispielsweise eine Verbindungsstange, mit dem Ventilglied des Schaltventils 14 verbunden ist. Die Aktorbewegung des Aktors 15 wird über das Verbindungsglied 16 auf das Ventilglied des Schaltventils 14 übertragen.

Über den Umfang verteilt können mehrere Brennstoffkanäle 8 in die Wandung der Wasserbuchse 5 eingebracht sein. Jeder Brennstoffkanal 8 wird von einem Schaltventil 14 gesperrt bzw. freigegeben, wobei gegebenenfalls ein gemeinsames Schaltventil für sämtliche Brennstoffkanäle 8 vorgesehen sein kann. Es ist aber auch möglich, pro Brennstoffkanal 8 ein Schaltventil 14 anzuordnen.

Das Schaltventil 14 befindet sich beispielsweise in einer Ausnehmung in der Wandung der Wasserbuchse 5. Die Ausnehmung erstreckt sich gegebenenfalls ringförmig umlaufend als Nut an der Außenseite der Wandung. Es ist auch möglich, alternativ zu einer Ausnehmung oder einer Nut das Schaltventil 14 an der Außenseite der Wasserbuchse 5 anzuordnen und ein Ventilgehäuse des Schaltventils an der Wasserbuchse oder einem sonstigen Gehäusebauteil der Vorkammer-Zündkerzenaufnahmeanordnung zu befestigen.

Eine konkrete Realisierung eines Schaltventils 14 in einer Vorkammer-Zündkerzenaufnahmeanordnung 1 ist in Fig. 2 dargestellt. Das Schaltventil 14 ist in einem hülsenförmigen Ventilgehäuse 17 angeordnet, das auf die Wasserbuchse 5 aufgesetzt und mit dieser verbunden, beispielsweise mit dieser verschraubt ist. Das Schaltventil 14 weist als Aktor 18 eine Magnetspule auf, deren Wicklungen ringförmig umlaufend im Schaltventil 14 angeordnet sind und die Wandung der Wasserbuchse 5 umgreifen.

Das Schaltventil 14 umfasst des Weiteren ein Ventilglied 19 sowie ein oder mehrere Federelemente 20, das bzw. die das Ventilglied 19 in eine Schließposition kraftbeaufschlagen, in welcher der oder die Brennstoffkanäle 8 versperrt sind. Das Ventilglied 19 ist vorzugsweise als ein umlaufender Ring ausgebildet, der von einem oder mehreren Federelementen 20 axial in die Schließposition gedrückt wird. Die Federelemente 20 sind beispielsweise als Schraubenfedern ausgebildet.

Die Magnetspule 18 als Aktor liegt axial beabstandet zu dem Ventilglied 19 und dem oder den Federelementen 20. Bei Bestromung der Magnetspule 18 wird eine Kraft auf das Ventilglied 19 ausgeübt, die das Ventilglied 19 gegen die Kraft des Federelementes 20 in die Öffnungsposition verstellt, wodurch der Brennstoffkanal 8 freigegeben wird und Brennstoff durch den Brennstoffkanal 8 in Richtung der Vorkammer 6 strömen kann. Mit Beendigung der Bestromung der Magnetspule 18 wird das Ventilglied19 durch die Kraft des oder der Federelemente 20 wieder in die Schließposition verstellt.

Das Schaltventil 14 einschließlich dem Ventilgehäuse 17 bildet eine zusammenhängende Baueinheit, die auf die Wasserbuchse 5 aufgesetzt wird. Das Ventilgehäuse 17 mitsamt Schaltventil 14 umgreift die Wasserbuchse 5. Im Ventilgehäuse 17 verlaufen Anschlusskanäle für die Strömungsverbindung zum oberen und unteren Abschnitt des Brennstoffkanals 8, so dass bei geöffnetem Ventilglied 19 der Brennstoff ohne Leckage vom oberen Abschnitt des Brennstoffkanals 8 über das Schaltventil 14 in den unteren Abschnitt des Brennstoffkanals strömen kann.

## Patentansprüche

1. Vorkammer-Zündkerzenaufnahmeanordnung zur Aufnahme einer Vorkammer-Zündkerze (3) in einer Gehäusebuchse (5), mit mindestens einem in die Wandung der Gehäusebuchse (5) eingebrachten Brennstoffkanal (8) zur Zufuhr von Brennstoff in eine Vorkammer (6), wobei zumindest ein verstellbares Ventilglied (19) eines Schaltventils (14) in die Wandung der Gehäusebuchse (5) zur Regulierung des Brennstoffstroms durch den Brennstoffkanal (8) eingebracht oder an der Wandung angeordnet ist, wobei das Ventilglied (19) in oder an der Wandung der Gehäusebuchse (5) zwischen einer Schließ- und einer Öffnungsposition verstellbar ist, und wobei über den Umfang verteilt mehrere Brennstoffkanäle (8) in die Wandung der Gehäusebuchse (5) eingebracht sind, **dadurch gekennzeichnet, dass** der Aktor (18) zum Verstellen des Ventilglieds (19) des Schaltventils (14) als bestrombare Magnetspule (18) ausgebildet ist, wobei die Magnetspule (18) ringförmig umlaufend in oder an der Wandung der Gehäusebuchse (5) angeordnet ist.

2. Vorkammer-Zündkerzenaufnahmeanordnung nach Anspruch 1, **dadurch gekennzeichnet, dass** das Ventilglied (19) des Schaltventils (14) von einem Aktor (15, 18) verstellbar ist, der in oder an der Wandung der Gehäusebuchse (5) angeordnet ist.

3. Vorkammer-Zündkerzenaufnahmeanordnung nach Anspruch 2, **dadurch gekennzeichnet, dass** der Aktor (18) in die Wandung der Gehäusebuchse (5) integriert ist.

4. Vorkammer-Zündkerzenaufnahmeanordnung nach Anspruch 2, **dadurch gekennzeichnet, dass** der Aktor (15) an der Stirnseite der Wandung der Gehäusebuchse (5) angeordnet ist.

5. Vorkammer-Zündkerzenaufnahmeanordnung nach Anspruch 4, **dadurch gekennzeichnet, dass** das Ventilglied (19) über eine durch die Wandung der Gehäusebuchse (5) hindurchgeführte Verbindungsstange mit dem Aktor (15) verbunden ist.

6. Vorkammer-Zündkerzenaufnahmeanordnung nach einem der Ansprüche 1 bis 5, **dadurch gekennzeichnet, dass** das Ventilglied (19) des Schaltventils (14) von einem in die Wandung der Gehäusebuchse (5) integrierten Federelement (20) in die Schließposition kraftbeaufschlagt ist.

7. Vorkammer-Zündkerzenaufnahmeanordnung nach Anspruch 1, **dadurch gekennzeichnet, dass** jedem Brennstoffkanal (8) jeweils ein Ventilglied (19) eines Schaltventils (14) zugeordnet ist.

8. Vorkammer-Zündkerzenaufnahmeanordnung nach Anspruch 7, **dadurch gekennzeichnet, dass** die Ventilglieder (19) von einem gemeinsamen Aktuator verstellbar sind.

9. Vorkammer-Zündkerzenaufnahmeanordnung nach einem der Ansprüche 1 bis 8, **dadurch gekennzeichnet, dass** das Schaltventil (14) ein Ventilgehäuse (17) aufweist, das mit der Gehäusebuchse (5) verbindbar, insbesondere auf die Gehäusebuchse (5) aufsetzbar ist.

10. Vorkammer-Zündkerzenaufnahmeanordnung nach einem der Ansprüche 1 bis 9, **dadurch gekennzeichnet, dass** die Gehäusebuchse (5) als eine wassergekühlte Wasserbuchse ausgebildet ist.

11. Gasmotor mit einer in einen Zylinderkopf (2) eingesetzten Vorkammer-Zündkerzenaufnahmeanordnung (1) nach einem der Ansprüche 1 bis 10.

## Claims

1. Prechamber spark plug receiving arrangement for receiving a prechamber spark plug (3) in a housing bushing (5), comprising at least one fuel duct (8), which is made in the wall of the housing bushing (5), for supplying fuel to a prechamber (6), wherein at least one adjustable valve member (19) of a switching valve (14) is introduced into the wall of the housing bushing (5) for regulating the fuel flow through the fuel duct (8) or is arranged on the wall, wherein the valve member (19) in or on the wall of the housing bushing (5) can be adjusted between a closed position and an open position, and wherein a plurality of fuel ducts (8) are made in the wall of the housing bushing (5) in a manner distributed over the periphery, **characterized in that** the actuator (18), for adjusting the valve member (19) of the switching valve (14), is designed as a solenoid (18) which can be energized, wherein the solenoid (18) is arranged peripherally in the form of a ring in or on the wall of the housing bushing (5).

2. Prechamber spark plug receiving arrangement according to Claim 1, **characterized in that** the valve member (19) of the switching valve (14) can be adjusted by an actuator (15, 18) which is arranged in or on the wall of the housing bushing (5).

3. Prechamber spark plug receiving arrangement according to Claim 2, **characterized in that** the actuator (18) is integrated into the wall of the housing bushing (5).

4. Prechamber spark plug receiving arrangement according to Claim 2, **characterized in that** the actuator (15) is arranged on the end side of the wall of the housing bushing (5).

5. Prechamber spark plug receiving arrangement according to Claim 4, **characterized in that** the valve member (19) is connected to the actuator (15) by means of a connecting rod which is routed through the wall of the housing bushing (5).

6. Prechamber spark plug receiving arrangement according to any of Claims 1 to 5, **characterized in that** the valve member (19) of the switching valve (14) is forced into the closed position by a spring element (20) which is integrated into the wall of the housing bushing (5).

7. Prechamber spark plug receiving arrangement according to Claim 1, **characterized in that** in each case one valve member (19) of a switching valve (14) is associated with each fuel duct (8).

8. Prechamber spark plug receiving arrangement according to Claim 7, **characterized in that** the valve members (19) can be adjusted by means of a common actuator.

9. Prechamber spark plug receiving arrangement according to any of Claims 1 to 8, **characterized in that** the switching valve (14) has a valve housing (17) which can be connected to the housing bushing (5), in particular can be fitted onto the housing bushing (5).

10. Prechamber spark plug receiving arrangement according to any of Claims 1 to 9, **characterized in that** the housing bushing (5) is designed as a water-cooled bushing.

11. Gas engine comprising a prechamber spark plug receiving arrangement (1) according to any of Claims 1 to 10 which is inserted into a cylinder head (2).

## Revendications

1. Agencement de réception de bougie d'allumage de chambre de précombustion pour la réception d'une bougie d'allumage de chambre de précombustion (3) dans une douille de boîtier (5), muni d'au moins un canal de combustible (8) réalisé dans la paroi de la douille de boîtier (5) pour l'introduction de combustible dans une chambre de précombustion (6), au moins un obturateur de soupape réglable (19) d'une soupape de commutation (14) étant réalisé dans la paroi de la douille de boîtier (5) pour la régulation du courant de combustible à travers le canal de combustible (8) ou étant agencé sur la paroi, l'obturateur de soupape (19) dans ou sur la paroi de la douille de boîtier (5) étant réglable entre une position de fermeture et d'ouverture, et plusieurs canaux de combustible (8) étant réalisés dans la paroi de la douille de boîtier (5) sous forme répartie sur la périphérie, **caractérisé en ce que** l'actionneur (18) pour le réglage de l'obturateur de soupape (19) de la soupape de commutation (14) est configuré en tant que bobine magnétique (18) pouvant être mise sous tension, la bobine magnétique (18) étant agencée circon-férentiellement sous forme annulaire dans ou sur la paroi de la douille de boîtier (5).

2. Agencement de réception de bougie d'allumage de chambre de précombustion selon la revendication 1, **caractérisé en ce que** l'obturateur de soupape (19) de la soupape de commutation (14) est réglable par un actionneur (15, 18), qui est agencé dans ou sur la paroi de la douille de boîtier (5).

3. Agencement de réception de bougie d'allumage de chambre de précombustion selon la revendication 2, **caractérisé en ce que** l'actionneur (18) est intégré dans la paroi de la douille de boîtier (5).

4. Agencement de réception de bougie d'allumage de chambre de précombustion selon la revendication 2, **caractérisé en ce que** l'actionneur (15) est agencé sur le côté frontal de la paroi de la douille de boîtier (5).

5. Agencement de réception de bougie d'allumage de chambre de précombustion selon la revendication 4, **caractérisé en ce que** l'obturateur de soupape (19) est relié à l'actionneur (15) par l'intermédiaire d'une tige de liaison traversant la paroi de la douille de boîtier (5).

6. Agencement de réception de bougie d'allumage de chambre de précombustion selon l'une des revendications 1 à 5, **caractérisé en ce que** l'obturateur de soupape (19) de la soupape de commutation (14) est sollicité en force dans la position de fermeture par un élément ressort (20) intégré dans la paroi de la douille de boîtier (5).

7. Agencement de réception de bougie d'allumage de chambre de précombustion selon la revendication 1, **caractérisé en ce qu'**un obturateur de soupape (19) d'une soupape de commutation (14) est associé à chaque canal de combustible (8).

8. Agencement de réception de bougie d'allumage de chambre de précombustion selon la revendication 7, **caractérisé en ce que** les éléments de soupape (19) sont réglables par un actionneur commun.

9. Agencement de réception de bougie d'allumage de chambre de précombustion selon l'une des revendications 1 à 8, **caractérisé en ce que** la soupape de commutation (14) comprend un boîtier de soupape (17), qui peut être relié à la douille de boîtier (5), notamment qui peut être placé sur la douille de boîtier (5).

10. Agencement de réception de bougie d'allumage de chambre de précombustion selon l'une quelconque des revendications 1 à 9, **caractérisé en ce que** la douille de boîtier (5) est configurée sous la forme d'une douille à eau refroidie par de l'eau.

11. Moteur à gaz muni d'un agencement de réception de bougie d'allumage de chambre de précombustion (1) selon l'une quelconque des revendications 1 à 10 inséré dans une tête de cylindre (2).
